# EUROPEAN PATENT APPLICATION

(11) **EP 2 688 034 A1**
(43) Date of publication of application: **22.01.2014**
(21) Application number: 13003243.6
(22) Date of filing: 25.06.2013
(51) Int. Cl.: G06Q 50/00, G06Q 30/02

(54) **Social network architecture**

(30) Priority: 17.07.2012 US 201213551363
(71) Applicant: SAP AG, 69190 Walldorf (DE)
(72) Inventor: Khan, Mohammad Asif, 69190 Walldorf (DE); Schmerder, Juergen, 69190 Walldorf (DE)
(74) Representative: Müller-Boré & Partner Patentanwälte PartG mbB

(57) **Abstract**

A social networking architecture comprises a plurality of nodes (persons) connected to one another by bonds reflecting common interests, the bonds having a strength, a time dimension, a geographic dimension, and an availability (e.g. ad hoc) dimension. Network members are allowed to define flexible interests (e.g. hobbies, professional skills/credentials), with the network revealing a strength of common interest between individual nodes. The temporal and geographic dimensions of the interest allow the network to connect available members having similar interest(s) in a specific location at a given time. An interface engine may allow the social network architecture to leverage relationships from pre-existing social networks and channels of communication.

## Description

### BACKGROUND

Embodiments of the present invention relate to social networking, and in particular, to an architecture for a social network.

Unless otherwise indicated herein, the approaches described in this section are not prior art to the claims in this application and are not admitted to be prior art by inclusion in this section.

In real life, people generally connect with one another based on shared attributes. Examples include but are not limited to hobbies, interests, and recommendations etc. These shared attributes result in the formation of trusted bonds.

By contrast, the architectures of conventional computer-implemented social networks may be based on other than these shared attributes. For example, suggestions made by some social networks are dependent on platform-specific algorithms, that do not take into account certain types of shared attributes. Moreover, many social networks do not allow the user to define rules for such matches, or allow for flexible rules which change as time goes by or location changes.

Finally, existing social networks may not recognize certain particularly relevant attributes between individuals in forming connections. One such relevant attribute can be geographic presence (e.g. where is the individual physically located relative to another individual within the network). Another relevant attribute can be availability (e.g. is the individual accessible and ready to be contacted via the network at the present time by another individual within the network).

Accordingly, the present disclosure addresses these and other issues with methods and systems providing novel architectures for social networking structures.

### SUMMARY

A social networking architecture comprises a plurality of nodes (persons) connected to one another by bonds reflecting common interests, the bonds having a strength, a time dimension, a geographic dimension, and an availability (e.g. ad hoc) dimension. Network members are allowed to define flexible interests (e.g. hobbies, professional skills/credentials), with the network revealing a strength of common interest between individual nodes. The temporal and geographic dimensions of the interest allow the network to connect available members having similar interest(s) in a specific location at a given time. An interface engine may allow the social network architecture to leverage relationships from pre-existing social networks and channels of communication.

An embodiment of a computer-implemented method comprises causing a network engine to receive an interest from current network user, causing the network engine to search an interest graph for an interest node corresponding to the interest and causing the network engine to return a list comprising other network users arranged based upon a bond strength reflecting a number of interests common between the current user and the other network users.

An embodiment of a non-transitory computer readable storage medium embodies a computer program for performing a method comprising causing a network engine to receive an interest from current network user, causing the network engine to search an interest graph for an interest node corresponding to the interest, and causing the network engine to return a list comprising other network users arranged based upon a bond strength reflecting a number of interests common between the current user and the other network users.

An embodiment of a computer system comprises one or more processors and a software program executable on said computer system. The software program is configured to cause a network engine to receive an interest from current network user, to cause the network engine to search an interest graph for an interest node corresponding to the interest, and to cause the network engine to return a list comprising other network users arranged based upon a bond strength reflecting a number of interests common between the current user and the other network users.

In some embodiments the interest graph comprises a tree having the interest nodes as root nodes, and having a plurality of person nodes as leaf nodes.

According to certain embodiments the bond strength reflects a temporal component.

In various embodiments the bond strength reflects a geographic component.

In some embodiments the geographic component is based upon a global positioning system (GPS) signal received from a device of the current network user.

According to particular components the bond strength reflects a network availability component.

In certain embodiments the network availability component is based upon tracked most recent network access by the other network users.

The following detailed description and accompanying drawings provide a better understanding of the nature and advantages of particular embodiments.

### BRIEF DESCRIPTION OF THE DRAWINGS

Figure 1 is a simplified schematic diagram showing a social networking architecture according to an embodiment.

Figure 1A illustrates various dimensions of a bond between individuals of the network.

Figure 2 is a simplified schematic diagram of an interest graph of an embodiment of a social networking architecture.

Figure 3 is a simplified schematic diagram showing bond strength in a social networking architecture according to an embodiment.

Figure 4 is a simplified schematic diagram showing evolution in a social networking architecture according to an embodiment.

Figure 5 illustrates hardware of a special purpose computing machine configured to implement a social networking architecture according to an embodiment.

Figure 6 illustrates an example of a computer system.

Figures 7A-D are screen shots of a user interface with a network engine according to an embodiment.

Figure 8 is a simplified process flow showing a method according to an embodiment.

### DETAILED DESCRIPTION

Described herein are techniques for providing an architecture for a social network. The apparatuses, methods, and techniques described below may be implemented as a computer program (software) executing on one or more computers. The computer program may further be stored on a computer readable medium. The computer readable medium may include instructions for performing the processes described below.

In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

A social networking architecture comprises a plurality of nodes (individuals) connected to one another by bonds reflecting common interests, the bonds having a strength dimension, a time dimension, and a geographic dimension. Individual members are allowed to define flexible interests (e.g. hobbies, professional skills/credentials), with the network revealing a strength of common interest between individual nodes. The temporal and geographic dimensions of the interest allow the network to connect people having similar interest(s) in a specific location at a given time. An interface engine may allow the social network architecture to leverage relationships from pre-existing social networks and channels of communication.

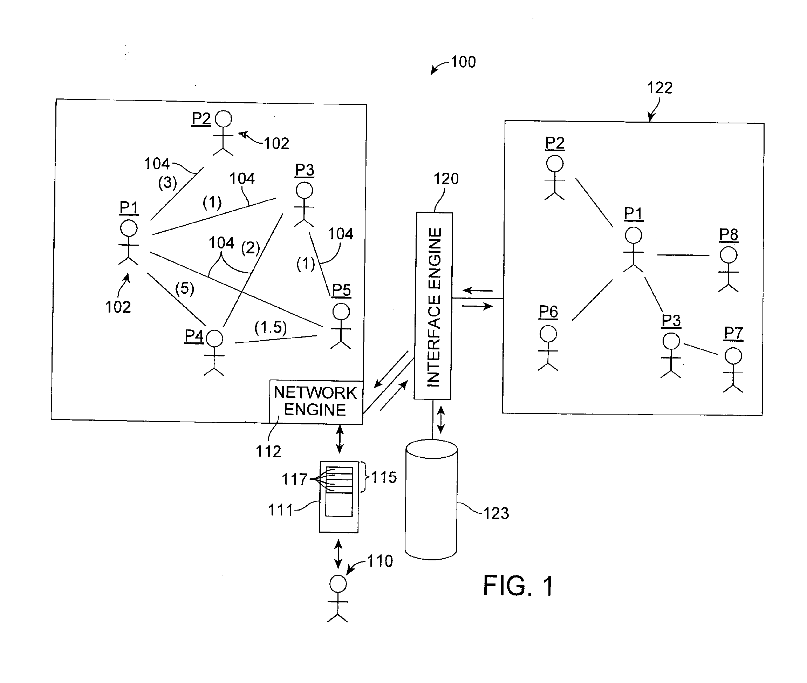

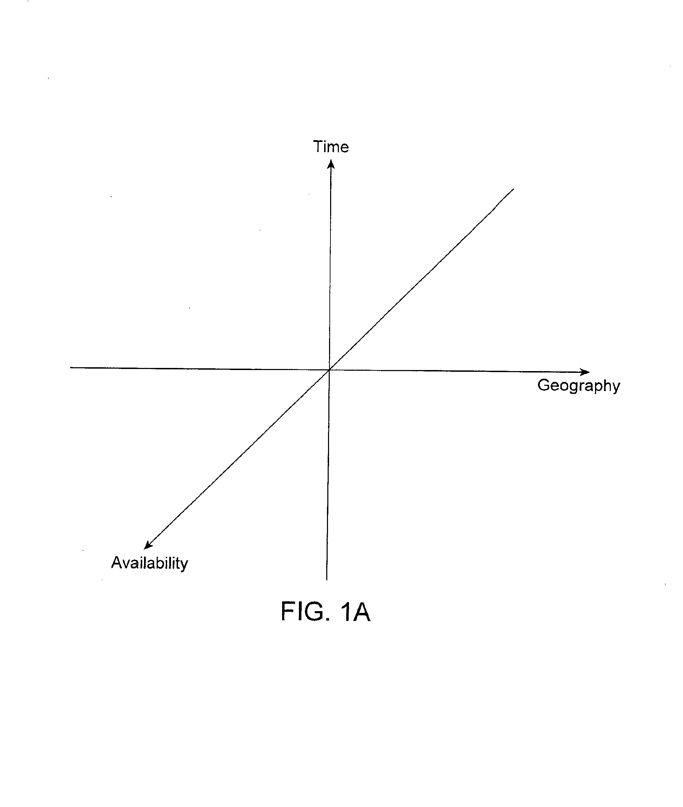

Figure 1 is a simplified schematic diagram showing an embodiment of a social networking system according to an embodiment. In particular, social network 100 comprises nodes 102 in the form of a plurality of persons (e.g. P1-P5) who are connected to each other by bonds 104 that reflect common interests.

According to embodiments, the bonds may exhibit a strength. For example, the bond between the person P1 and the person P4 has a strength of three (3) in Figure 1. In certain embodiments, this strength can reflect a plurality of common personal/professional interests. For example, a bond strength of two (2) between persons P3 and P4 of the network could reflect common interests in both software programming and hang-gliding.

It is noted that the strength of a bond need not be an integer value. For example the strength of the bond between persons P4 and P5 of the network is one and one-half (1.5). This could reflect the impact of a temporal dimension, an availability dimension, and/or a geographic dimension of the bond.

In particular, Figure 1A is a simplified schematic view showing the dimensional character of a bond according to an embodiment. The bond includes a temporal component reflecting the strength of the bond over time. The bond also includes a geographic component reflecting strength of the bond based upon physical proximity of the persons. The bond further includes an availability component, reflecting the strength of the bond based upon availability of the persons to contact the social network architecture.

Thus the bond strength of (1.5) between persons P4 and P5 in Figure 1, may reflect a change in the interests of persons P4 and/or P5 over time (e.g. little or no recent network activity in the hang gliding sphere). This evolution in interests serves to lessen the magnitude of the bond.

Alternatively, the person P4 may currently be located at a larger geographic distance from the person P5 (e.g. due to vacation, business travel, relocation). Such separation may serve to weaken the strength of the bond previously established.

According to certain embodiments, the geographic component of the bond strength may be determined automatically based upon information received from a user. For example, the member may access the network engine utilizing a portable device equipped with global positioning system (GPS) functionality, with the device communicating the member's location as a GPS signal.

Still further alternatively, the strength of the bond between individuals P4 and P5 may have been weakened based upon the availability dimension of the bond. Specifically, one or both individuals may not be available at the present time to interact over the social network, thereby lowering the strength of the bond.

According to certain embodiments, the availability component may be based upon tracked network access data. For example, network access (e.g. login, checkin) by a member tracked at a recent time, may indicate a high availability component for that member. By contrast, a most recent network access by a member that is tracked at a more distant time in the past, may indicate a low availability component for that member.

Factors other than time, geography, and/or availability may also affect bond strength. For example, the interest itself may be structured in a graduated manner. Thus the bond strength of individuals sharing an interest in computer programming may be only a one (1), while individuals sharing an interest in the form of employment for C++ programming, may lead to a significantly higher bond strength, e.g. (2.5).

As shown in Figure 1, individual users 110 may interact using a device 111 with the social network via a network engine 112. This network engine may be responsible for performing one or more tasks, including but not limited to:
- allowing users to formulate interests;
- correlating interests with other members of the network, and
- constructing/maintaining the structure of the social network based upon those interests.

According to particular embodiments, the network engine may return to a user via his/her device, results in the form of a listing 115 of other network members 117 sharing common interests. As is described in detail below, the other network members may be arranged in this listing according to a bond strength.

The social network architecture may further comprise an interface engine 120. The interface engine is in communication with other, existing networks 122 to which one or more individuals may also be members. It is the role of the interface engine to interrogate other networks to recognize participation by individuals of the instant social network, and then to leverage to the extent possible, information in those other networks that may be useful in establishing and maintaining the interests and bonds comprising the architecture of the instant social network.

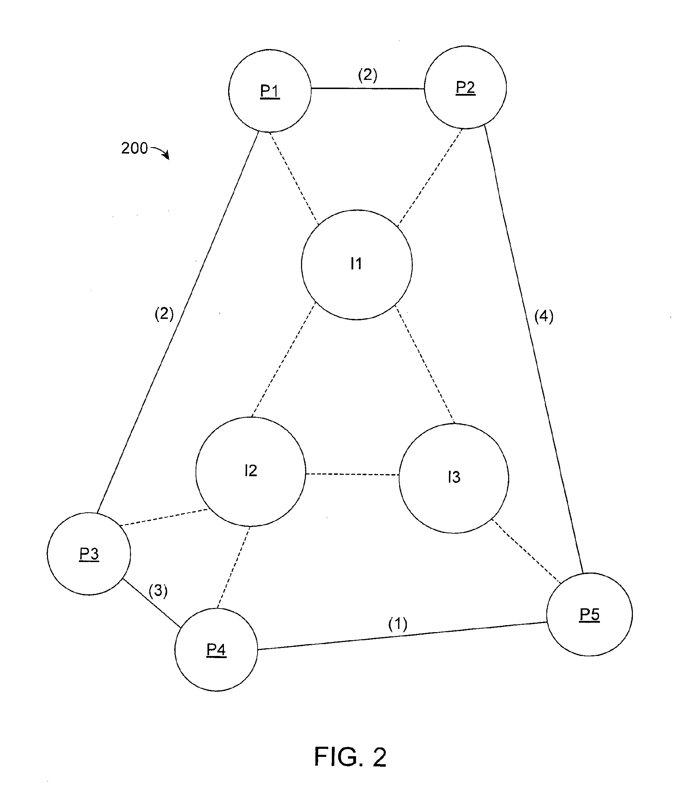

The instant social network formed in Figure 1, has an underlying mathematical graph model that is shown in Figure 2. In particular, interest nodes (1#) in Figure 2 are derived from persons expressing their interest.

Interests are inter-related to each other. As the persons P1-P5 express interests, they are connected to an interest node at a particular time and place.

Further transitively, persons may be connected to other persons through the interest nodes. As such, a social network of people is developed which is based on the interest at the particular location and time.

From a time in the past, two persons might share similar interests. This sharing of interests is called the bond.

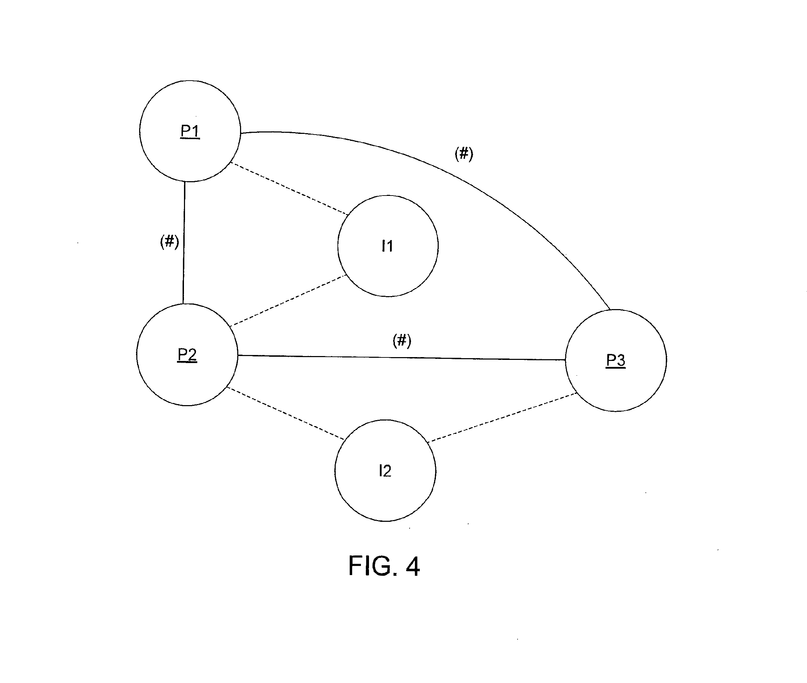

Meaningful conversations have a trait of a higher bonding between the two persons. Embodiments of social networks increase/decrease the bond between two persons. Further, as shown and described below in connection with Figure 4, two persons on the network can discover each other using an interest-person tree.

Again, Figure 2 is a simplified schematic diagram of an interest graph of a social networking architecture according to an embodiment. The interest graph 200 is in the form of a tree, with interests (1#) representing root nodes 202, and persons (P#) representing leaf nodes 204.

In Figure 2, as well as Figures 3-4, solid lines between leaf nodes represent bonds. Dashed lines represent interconnection between the root nodes in the graph.

The interest graph 200 augments a strongly connected directed graph (network), with a minimum weight of 1 for an ordered set of vertices's.

The weight of an ordered set of vertices's, is the common interest shared by the two vertices:
deg (interest node) > 0
deg (leaf node) = 1, where deg( ) represents degrees of separation.
The shortest distance between two individuals, can be traversed via the interests they share.

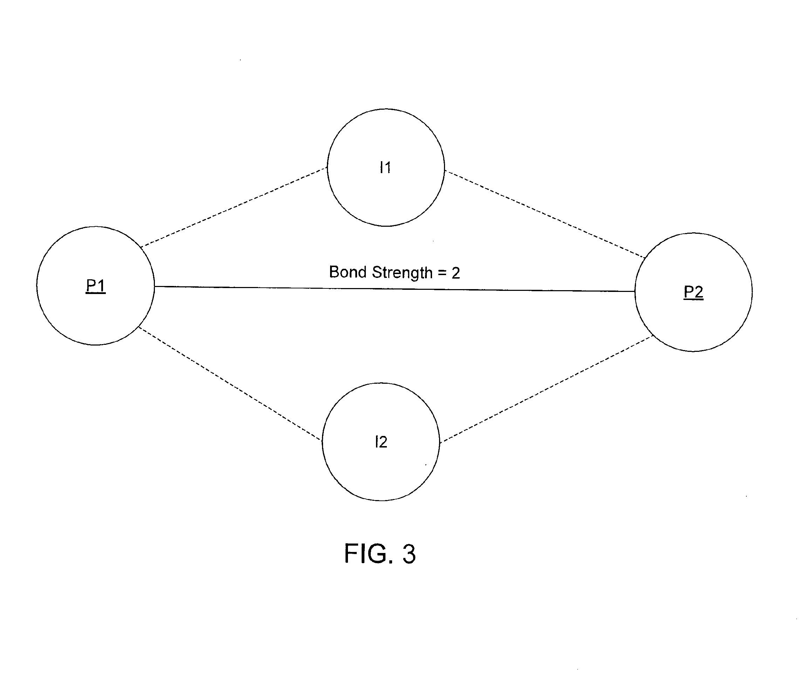

Figure 3 is a simplified schematic diagram showing bond strength in a social networking architecture according to an embodiment. As has been discussed previously, individual persons in the network form relationships through shared interests.

These relationships developed by shared interests over a period of time contribute to the strength of the bonds. The strength of a bond may be proportional to the shared interests.

Figure 4 is a simplified schematic diagram showing evolution in a social networking architecture according to an embodiment. In particular, a location has an omnipresent interest graph which is morphing itself as time goes by. People discover new interests by virtue of presence, and also add new interests to the graph.

Thus in Figure 4, persons P1 and P2 share a common interest I1. Similarly persons P2 and P3 share an interest I2. Based on the strength of the bond between persons P2 and P3, the network engine allows person P3 to find the interest I1. A bond is established between persons P3 and P1 by virtue of this interest. In this manner, a member can interact with the network to discover new friends and develop new interests.

The interest node I1 gets an additional count to it. A node count is the weight of the node in the graph. The node count reflects how many people are interested in that particular topic.

The degree of interest node may be ever growing. The higher the degree, the more likely the chances for people to join. In particular, a degree represents how many connections the interest node has. The higher the degree, the more prominence the interest node gets, and the more likely persons would want to do it.

Example

In a simplified example, a first member checks into the network with an interest in hang-gliding. A second member also checks into the network with hang gliding as an interest. If a third member checks into the network with an interest in hang gliding, hang gliding has a degree/score of three (3), and may thus be displayed on the top of a list which a fourth member sees when he joins in.

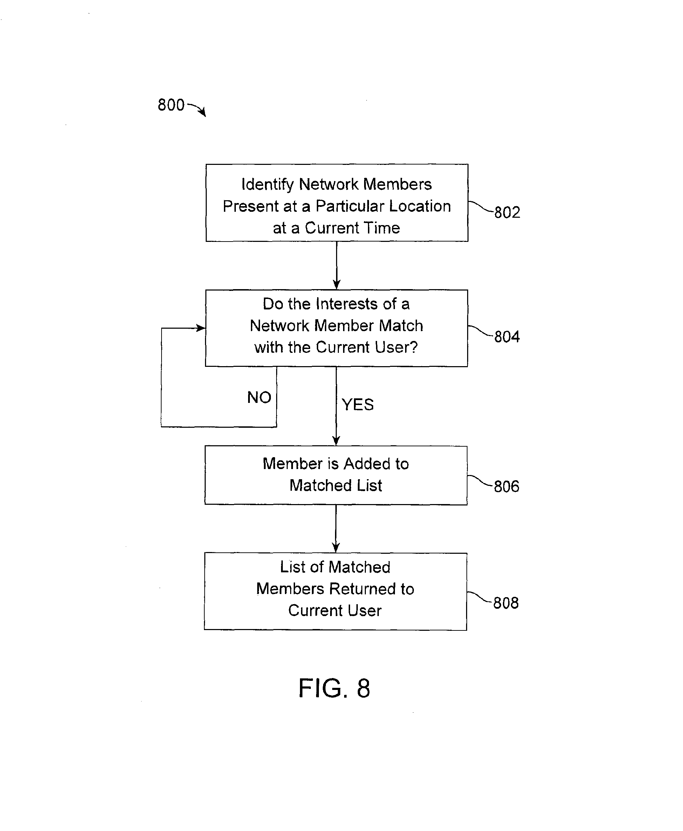

A social network according to an embodiment may employ the method summarized in the process flow of Figure 8. In particular, a first step 802 of method 800 comprises identifying network members present at a particular location at a current time.

A second step 804 of the method iterates over all the members, the following inquiry: do the interests match with the current user. In a third step 806 if the interests match, then the member is added to the matched list. If the interests do not match, then the method returns to step 804. In a fourth step 808, the list of matched members is returned to the current user.

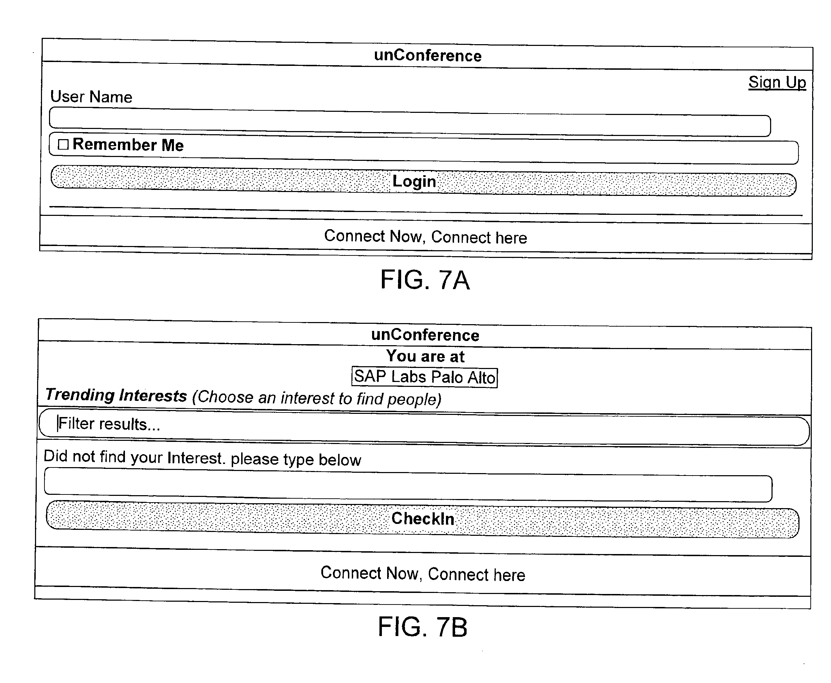

Figures 7A-D show examples of screen shots of a user interface for interacting with a social network (here named "unConference") according to an embodiment. In Figure 7A, a first member of the network accesses a screen for login to the network.

Figure 7B shows a checkin screen allowing that first network member to formulate and express an interest to the network. The screen shown in Figure 7B indicates the current location of the first network member.

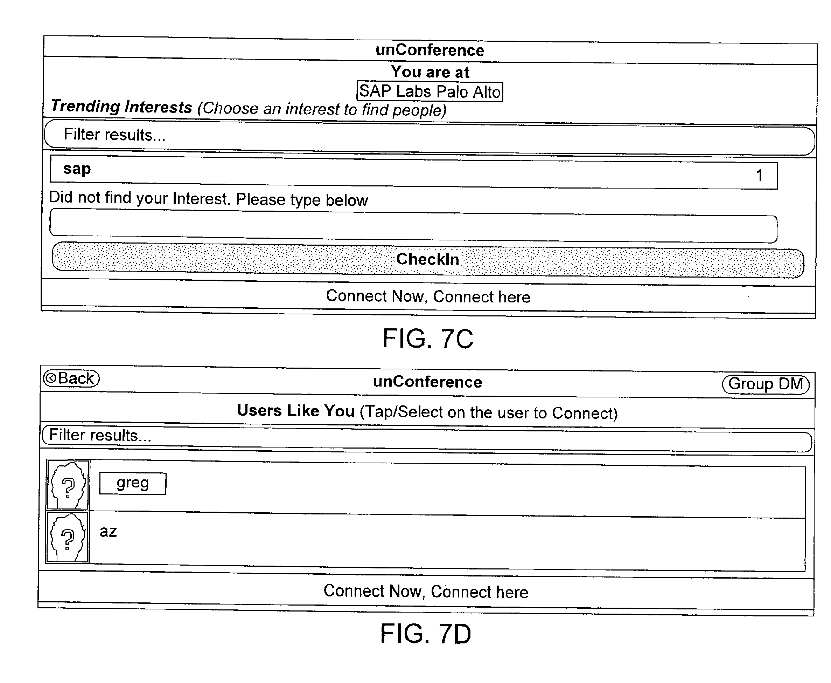

Figure 7C shows a second member of the network (a current user), checking-in with an interest. Here, that interest is the name of an organization (here "sap").

Figure 7D shows that by virtue of typing in this interest, the current user finds the first network member. This result is indicated by returning a listing including the name ("Greg") of the first network member.

Embodiments of social networks can find effective usage in a variety of environments. One particular scenario is in the conference milieu, wherein many participants having some general degree of common interest (e.g. the subject matter of the conference), may be differentiated with an even higher degree of granulation based upon factors such as their sub-specialties, current geographic location, present focus, and availability on the social network.

One type of network user in such a context, is an ordinary consumer. This type of user may rely upon the social network for purposes such as finding others with similar interests, expanding a network of contacts, and socializing without wasting time.

Another potential type of user in this context, is a power user. Such a user may utilize the network to discover hot topics of conversation, identify particular individuals engaging in intensive discourse on those topics, and contacting same to expand a network of contacts.

An organizer of the conference may also gain significant advantage from using the social networking architecture according to an embodiment. In particular, the conference organizer could use the network for purposes such as obtaining trend analysis, engaging attendees, and capturing leads.

Finally, a service provider could also gain benefit from use of the social network according to an embodiment. In particular, the service provider could utilize the network to get people onto his/her platform, and/or to furnish a superior recommendation system. Still another use is to sell premium services by making available network details allowing trend analysis and bond strength analysis.

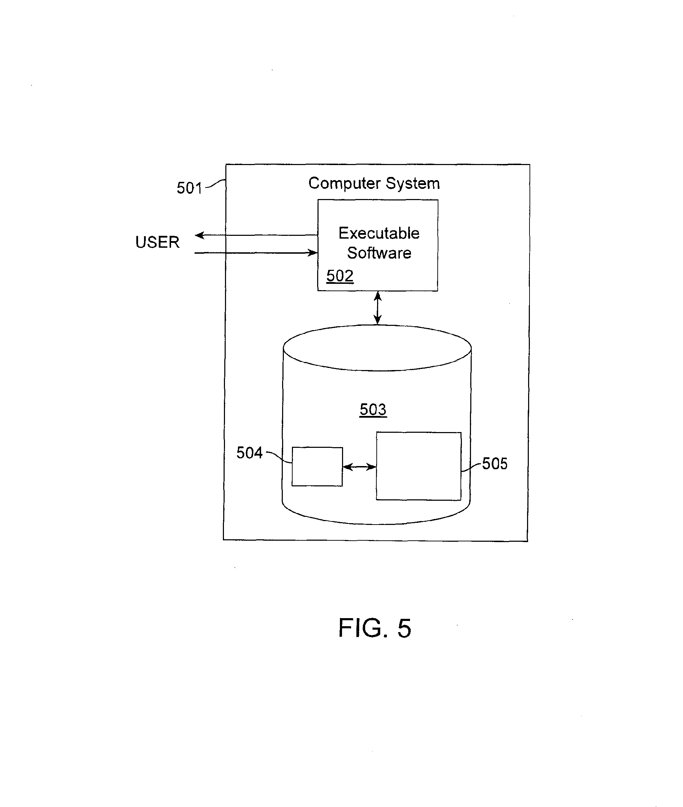

Fig. 5 illustrates hardware of a special purpose computing machine configured to implement a social network architecture according to an embodiment. In particular, computer system 500 comprises a processor 502 that is in electronic communication with a non-transitory computer-readable storage medium 503. This computer-readable storage medium has stored thereon code 505 corresponding to a network engine. Code 504 corresponds to an interface engine. Code may be configured to reference data stored in a database of a non-transitory computer-readable storage medium, for example as may be present locally or in a remote database server. Software servers together may form a cluster or logical network of computer systems programmed with software programs that communicate with each other and work together in order to process requests.

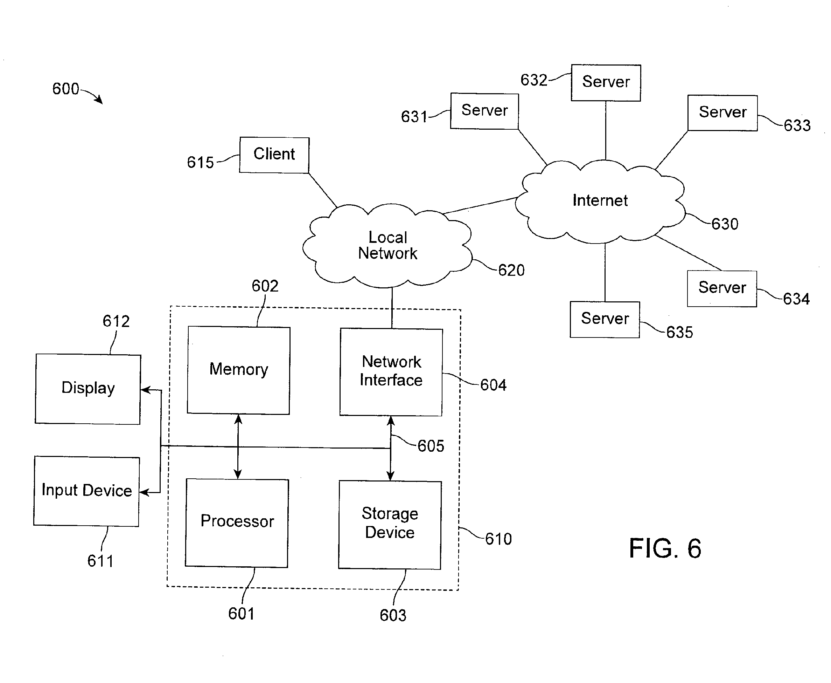

An example computer system 610 is illustrated in Fig. 6. Computer system 610 includes a bus 605 or other communication mechanism for communicating information, and a processor 601 coupled with bus 605 for processing information. Computer system 610 also includes a memory 602 coupled to bus 605 for storing information and instructions to be executed by processor 601, including information and instructions for performing the techniques described above, for example. This memory may also be used for storing variables or other intermediate information during execution of instructions to be executed by processor 601. Possible implementations of this memory may be, but are not limited to, random access memory (RAM), read only memory (ROM), or both. A storage device 603 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 603 may include source code, binary code, or software files for performing the techniques above, for example. Storage device and memory are both examples of computer readable mediums.

Computer system 610 may be coupled via bus 605 to a display 612, such as a cathode ray tube (CRT) or liquid crystal display (LCD), for displaying information to a computer user. An input device 611 such as a keyboard and/or mouse is coupled to bus 605 for communicating information and command selections from the user to processor 601. The combination of these components allows the user to communicate with the system. In some systems, bus 605 may be divided into multiple specialized buses.

Computer system 610 also includes a network interface 604 coupled with bus 605. Network interface 604 may provide two-way data communication between computer system 610 and the local network 620. The network interface 604 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 604 sends and receives electrical, electromagnetic, or optical signals that carry digital data streams representing various types of information.

Computer system 610 can send and receive information, including messages or other interface actions, through the network interface 604 across a local network 620, an Intranet, or the Internet 630. For a local network, computer system 310 may communicate with a plurality of other computer machines, such as server 615. Accordingly, computer system 610 and server computer systems represented by server 615 may form a cloud computing network, which may be programmed with processes described herein. In the Internet example, software components or services may reside on multiple different computer systems 610 or servers 631-635 across the network. The processes described above may be implemented on one or more servers, for example. A server 631 may transmit actions or messages from one component, through Internet 630, local network 620, and network interface 604 to a component on computer system 610. The software components and processes described above may be implemented on any computer system and send and/or receive information across a network, for example.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A computer-implemented method comprising:
causing a network engine to receive an interest from current network user;
causing the network engine to search an interest graph for an interest node corresponding to the interest; and
causing the network engine to return a list comprising other network users arranged based upon a bond strength reflecting a number of interests common between the current user and the other network users.

2. A method as in claim 1 wherein the interest graph comprises a tree having the interest nodes as root nodes, and having a plurality of person nodes as leaf nodes.

3. A method as in claim 1 or 2 wherein the bond strength reflects a temporal component.

4. A method as in any one of claims 1 to 3 wherein the bond strength reflects a geographic component.

5. A method as in claim 4 wherein the geographic component is based upon a global positioning system (GPS) signal received from a device of the current network user.

6. A method as in any one of claims 1 to 5 wherein the bond strength reflects a network availability component.

7. A method as in claim 6 wherein the network availability component is based upon tracked most recent network access by the other network users.

8. A non-transitory computer readable storage medium embodying a computer program for performing a method according to any one of claims 1 to 7.

9. A computer system comprising:
one or more processors;
a software program, executable on said computer system, the software program configured to:
cause a network engine to receive an interest from current network user;
cause the network engine to search an interest graph for an interest node corresponding to the interest; and
cause the network engine to return a list comprising other network users arranged based upon a bond strength reflecting a number of interests common between the current user and the other network users.

10. A computer system as in claim 9 wherein the interest graph comprises a tree having the interest nodes as root nodes, and having a plurality of person nodes as leaf nodes.

11. A computer system as in claim 9 or 10 wherein the bond strength reflects a temporal component.

12. A computer system as in any one of claims 9 to 11 wherein the bond strength reflects a geographic component.

13. A computer system as in claim 12 wherein the geographic component is based upon a global positioning system (GPS) signal received from a device of the current network user.

14. A computer system as in any one of claims 9 to 13 wherein the bond strength reflects a network availability component.
